# EUROPEAN PATENT APPLICATION

(11) **EP 4 703 968 A1**
(43) Date of publication of application: **04.03.2026**
(21) Application number: 25164534.7
(22) Date of filing: 18.03.2025
(51) Int. Cl.: G06N 3/045, G06N 3/08, G06Q 10/087, G06N 3/006

(54) **TRAINING A NEURAL DATABASE FOR ENTITY MATCHING**

(30) Priority: 30.08.2024 US 202418822013
(71) Applicant: Intuit Inc., Mountain View, CA 94043 (US)
(72) Inventor: MUTHU, Malathy, Mountain View, 94043 (US); JHAVERI, Samvid, Mountain View, 94043 (US); KALLEPALLI, Goutham, Mountain View, 94043 (US)
(74) Representative: D Young & Co LLP

(57) **Abstract**

Certain aspects of the disclosure provide a method of training a neural database for entity matching. In examples, a method may include: extracting, from an electronic data repository, entity data related to a first entity that provides a good or a service; transforming the entity data into structured entity data configured to be processed by a machine learning model; processing the structured entity data with the machine learning model to generate metadata associated with the structured entity data; augmenting the structured entity data with the metadata associated with the structured entity data; and training the neural database based on the augmented structured entity data to predict one or more second entities that supply materials for the first entity and associated with the good or the service.

## Description

### BACKGROUND

### Field

Aspects of the present disclosure relate to generating training data for and training a neural database for entity matching.

### Description of Related Art

An entity (e.g., an organization) offering goods and/or services generally does so with materials supplied by other entities (e.g., suppliers). For example, a sandwich shop that sells sandwiches to consumers in a business-to-consumer transaction needs to first obtain the raw materials for the sandwich (e.g., meat, cheese, lettuce, and bread) from one or more raw material suppliers in a business-to-business transaction. While entities offering business-to-consumer goods and services are often very easy to find using, for example, an Internet search provider, entities offering business-to-business raw materials may not be so easy. Thus, discovering raw material suppliers for a particular good or service offered by an entity is a challenging technical problem.

### SUMMARY

Particular aspects are set out in the appended independent claims. Various optional embodiments are set out in the dependent claims.

At least some aspects of the described approaches address finding supplier entities in an improved manner.

One aspect provides a method of training a neural database for entity matching, including: extracting, from an electronic data repository, entity data related to a first entity that provides a good or a service; transforming the entity data into structured entity data configured to be processed by a machine learning model; processing the structured entity data with the machine learning model to generate metadata associated with the structured entity data; augmenting the structured entity data with the metadata associated with the structured entity data; and training the neural database based on the augmented structured entity data to predict one or more second entities that supply materials for the first entity and associated with the good or the service.

Another aspect provides a method, including: receiving, via a user interface, a user query to determine one or more second entities that supply materials associated with a good or a service provided by a first entity; processing the user query with a trained neural database trained to predict the one or more second entities that supply the materials associated with the good or the service provided by the first entity; receiving, from the trained neural database, an output including the one or more second entities; and sending the output to the user interface to cause an action via the user interface.

Other aspects provide processing systems configured to perform the aforementioned methods as well as those described further herein; computer-readable mediums comprising instructions that, when executed by one or more processors of a processing system, cause the processing system to perform the aforementioned methods as well as those described further herein; a computer program product embodied on a computer readable storage medium comprising code for performing the aforementioned methods as well as those further described herein; and a processing system comprising means for performing the aforementioned methods as well as those further described herein.

The following description and the related drawings set forth in detail certain illustrative features of one or more aspects.

### DESCRIPTION OF THE DRAWINGS

The appended figures depict certain aspects and are therefore not to be considered limiting of the scope of this disclosure.
**FIG. 1** depicts an example computing environment in which a neural database training system is configured to generate training data to train a neural database for entity matching.
**FIG. 2** depicts an example configuration of a neural database training system configured to generate training data to train a neural database for entity matching.
**FIG. 3** depicts an example configuration of a training data generation component of the neural database training system of **FIG. 2****.**
**FIGS. 4A-4C** depict illustrations of data generated at various steps of the methods of generating training data to train a neural database for entity matching.
**FIG. 5** depicts illustration of data returned by a trained neural database trained based on training data generated by the training data generation component of **FIG. 3****.**
**FIG. 6A** depicts an example flowchart illustrating a method for generating training data to train a neural database for entity matching.
**FIG. 6B** depicts an example flowchart illustrating a method for utilizing a trained neural database for entity matching.
**FIG. 7** depicts an example processing system with which aspects of the present disclosure can be performed.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure provide apparatuses, methods, processing systems, and computer-readable mediums for generating training data for training a neural database.

Aspects of the present disclosure utilize an artificial intelligence (AI) framework that integrates a neural database with generative AI capabilities. For example, a Generative Pre-trained Transformer 4 (GPT-4) model may be used to analyze and process data extracted from a software system (e.g., an electronic data repository of the software system). Particularly, aspects of the present disclosure are directed to matching one entity with one or more other entities based on the data extracted from the electronic data repository. By generating structured entity data and associated metadata based on the extracted data, certain aspects of the present disclosure generate key (e.g., keyword) and value pairs that map goods (e.g., products) or services provided by one entity or its entity name to materials, such as raw materials, that may be supplied by one or more other entities. In some embodiments, the key and value pairs may map goods or services provided by one entity or its entity name to delegable services (for providing the goods or services) that can be delegated or sub-contracted to one or more other entities. The generated key and value pairs are then used to precisely match an entity (e.g., an organization) with suitable entities (e.g., suppliers for materials). The suitable entities may be identified from, for example, a data repository (e.g., datalake) of potential partner entities. The AI-driven techniques described herein not only enhance search efficiency and accuracy (e.g., as compared to data retrieval from traditional databases), but also adapt to user preferences and historical data through prioritization and reinforcement learning. The reinforcement learning enables continual improvement to entity matching (e.g., recommending or predicting one or more supplier entities), ensuring that entities can quickly and accurately find the most relevant supplier entities for their specific needs.

Generally, an entity providing good(s) and/or service(s) may keep track of its supplier information, for example, by using a traditional supplier database. An entity may initially look for and identify supplier entities by collecting recommendations from contacts, performing online research, etc. Obtaining an initial full profile of accurate supplier entity information for the supplier database often requires significant time and effort. Moreover, maintaining the supplier database requires consistent additional effort to track changes in supplier entity profile data and update the supplier database accordingly. Because this tedious step is often overlooked, over time, the information stored in a supplier database tends to go out of date and, without manual intervention, will become a source of misinformation. Moreover, the presence of new, and perhaps better, supplier entities often goes overlooked without active, time-consuming management of the supplier database.

Certain aspects of the present disclosure provide a solution to determining supplier entities more efficiently and accurately. For example, the techniques described herein begin with extracting entity data related to a supplier entity that provides goods and/or services. The extracted entity data may include specific examples of the types of goods and/or services provided by the entity - such as meat, cheese, bread, etc. The extracted entity data is then transformed into structured entity data that can be processed by a machine learning model, which in some examples may be a large language model (LLM), such as a generative pre-trained transformer (GPT) model. The LLM may be open-source or closed LLM. The machine learning model processes the structured entity data to generate metadata, for example, key and value pairs that map goods and/or services provided by the entity to raw materials necessary for those goods and services. For example, meat, cheese, and bread may be raw materials mapped to good offered by a sandwich shop or caterer. Beneficially, the metadata provides additional context that improves the ability to train a neural database. For example, the generated metadata may augment the structured entity data and be used for training a neural database to identify supplier entities relevant to a target entity. A new entity may use such a trained neural database to quickly identify relevant supplier entities relevant to its offered goods and services without the need to manually create and maintain a supplier database.

Aspects of the present disclosure thus improve efficiency and accuracy in retrieving information via a neural database through improved training of the neural database with augmented structured entity data.

### Example Computing Environment

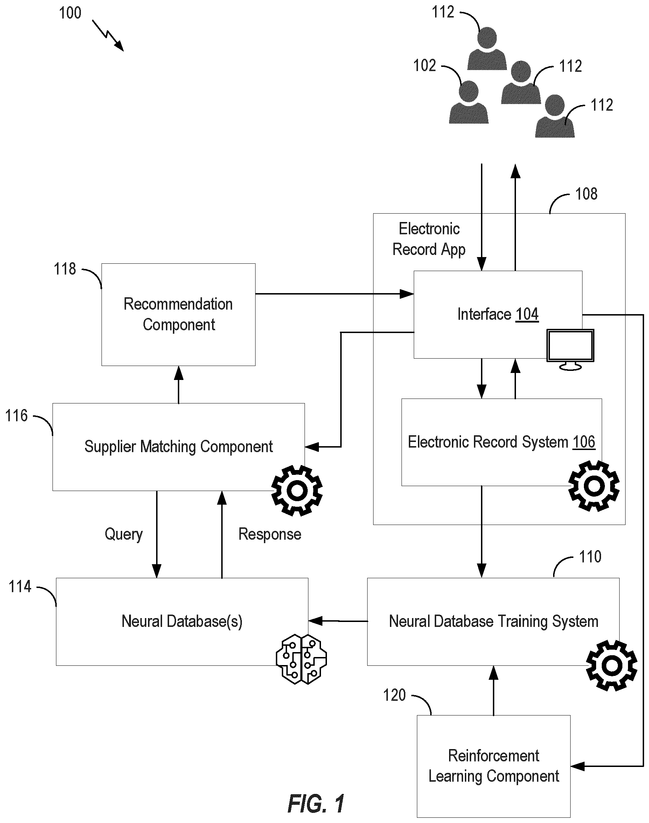

FIG. 1 depicts an example computing environment in which a neural database training system is configured to generate training data to train a neural database for matching one entity (e.g., an organization, providing goods and/or services) with one or more other entities (e.g., supplier entities supplying materials used for providing the goods and/or services).

The example computing environment includes system 100. System 100 includes electronic record application 108, neural database training system 110, neural database(s) 114, supplier matching component 116, recommendation component 118, and reinforcement learning component 120. Neural database training system 110 is used to train neural database(s) 114 for use by supplier matching component 116. Further, in this example, neural database training system 110 is coupled to reinforcement learning component 120, which implements Reinforcement Learning with Human Feedback (RLHF). Interface 104 of electronic record application 108 provides a software interface for first user 102 to interface with electronic record system 106 of electronic record application 108, as well as supplier matching component 116.

In one example, first user 102 provides an input to supplier matching component 116 via interface 104 to determine one or more entities (e.g., supplier entities that are associated with second users 112) that supply material(s) for an entity associated with first user 102. The determined (e.g., matched) supplier entities may be presented to first user 102 via interface 104 by recommendation component 118 coupled to supplier matching component 116. Though shown separately in this example for descriptive clarity, recommendation component 118 and supplier matching component 116 may be combined in other implementations.

In certain aspects, electronic record application 108 may be a software application for recording electronic data. For example, electronic record application 108 may be an accounting software application, such as QuickBooks^{®} offered by Intuit Inc. of Mountain View, California, where first user 102 and second users 112 may enter data for accounting services (e.g., related to transactions by the entity associated with first user 102 and transactions by supplier entities associated with second users 112). While first user 102 and second users 112 are both end-users of electronic record application 108, for the description provided herein, first user 102 is described as being associated with an entity providing goods and/or services and searching for one or more supplier entities supplying materials used for the goods and/or services, and second users 112 are described as being associated with supplier entities supplying the materials used for the goods and/or services. First user 102 and second users 112 may enter accounting data related to, for example, the respective transactions and expenses of their corresponding entities via electronic record application 108.

Electronic record application 108 includes interface 104 and electronic record system 106. Interface 104 is a user interface (e.g., a front-end user interface) for first user 102 and second users 112 to access electronic record system 106. Electronic record system 106 is a system (e.g., a back-end system) configured for receiving input from first user 102 and second users 112 regarding information related to their associated entities. For example, electronic record application 108 may be configured for providing an accounting service, such as accepting payment requests, managing and making payments, providing payroll functions, etc. Interface 104 may be a user interface (e.g., a web-based interface, such as a web browser, a native user interface of an accounting application, etc.) for accessing electronic record system 106 of electronic record application 108.

Interface 104 of electronic record application 108 is also coupled to supplier matching component 116 and recommendation component 118. In certain embodiments, supplier matching component 116 and recommendation component 118 may be a combined software component or individual software components accessible by electronic record application 108. For example, supplier matching component 116 and recommendation component 118 may be functionalities provided by a combined service (e.g., a microservice) accessible to electronic record application 108, for example, via one or more Application Programming Interfaces (APIs). Interface 104 may be used to provide input to supplier matching component 116, such as a request to find one or more supplier entities for materials used for providing goods and/or services. Supplier matching component 116 may provide a query as an input (e.g., based on a user input received via interface 104) to neural database(s) 114 to receive a response regarding one or more supplier entities matched to the entity associated with first user 102. First user 102 may request (e.g., via user input received via interface 104) for information regarding the one or more supplier entities to identify potential suppliers for supplying materials to be used for the goods and/or services provided by the entity associated with first user 102. An example query to neural database(s) 114 may be to find one or more supplier entities for given materials (e.g. "flour"). Supplier matching component 116 may provide one or more results, such as information regarding the one or more supplier entities. These results are provided to recommendation component 118.

Recommendation component 118 is used to provide data to first user 102 to assist first user 102 in determining the potential suppliers of materials relevant to its offered goods and services. For example, recommendation component 118 may provide a list of supplier entities that offer relevant materials to goods and services offered by first user 102.

In some embodiments, recommendation component 118 may send messages (e.g., personalized messages) to the matched supplier entities to, for example, request materials. To prepare the personalized messages to the matched supplier entities, recommendation component 118 may prompt a machine learning model, such as an LLM, to generate the personalized messages to be provided to first user 102 for sending to the matched supplier entities.

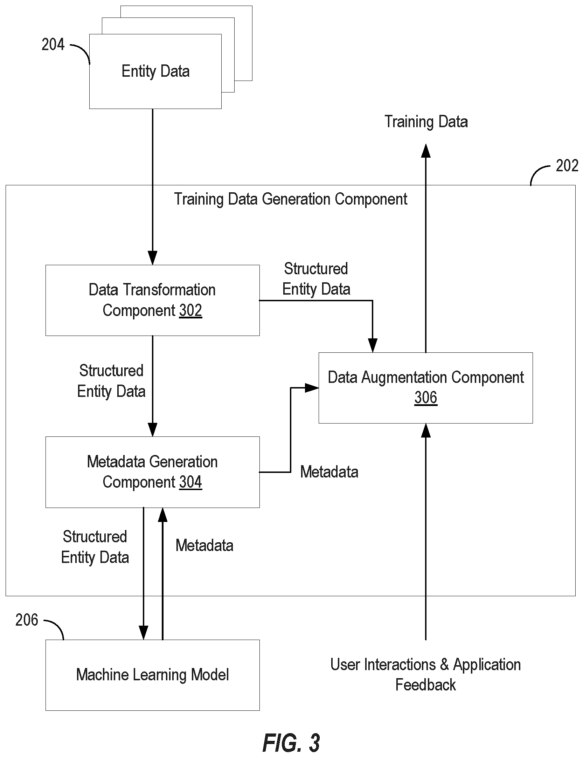

In some embodiments, first user 102 may specify, via interface 104 to electronic record application 108 (e.g., by one or more associated user interface elements), additional settings and/or preferences related to a potential supplier entity. Examples of the additional settings and/or preferences include: location of the potential supplier entity, co-branding availability or interest by the potential supplier entity, owner status of the potential supplier entity, shipping lead time associated with the potential supplier entity, existing promotions by the potential supplier entity, contact method preference of the potential supplier entity, etc. These settings and/or preferences may be used as factors for consideration in generating metadata for preparing augmented training data, as described with respect to **FIG. 3****.**

Location of the potential supplier entity may be related to proximity of the potential supplier entity to the entity associated with first user 102, where first user 102 may prefer a potential supplier entity that is located within a certain maximum threshold distance from the entity associated with first user 102. Co-branding availability or interest may be related to whether the potential supplier entity may be interested in using brand names of the potential supplier entity and the entity associated with first user 102 jointly for marketing a single product or service, where first user 102 may prefer a potential supplier entity that is interested in co-branding a product or service jointly with other entities, such as the entity associated with first user 102. Owner status of the potential supplier entity may be related to whether the owner of the potential supplier entity may be, for example, a veteran, a woman, a person of minority group, a disabled person, etc., where first user 102 may prefer to work with a potential supplier entity owned by someone that may be a veteran, a woman, a person of minority group, and/or a disabled person, etc. First user 102 may provide other settings and/or preferences, such as related to shipping lead time, existing promotions, and contact method preference, where such settings and/or preferences may be related to, for example, specific characteristics that first user 102 may be looking for in a potential supplier entity.

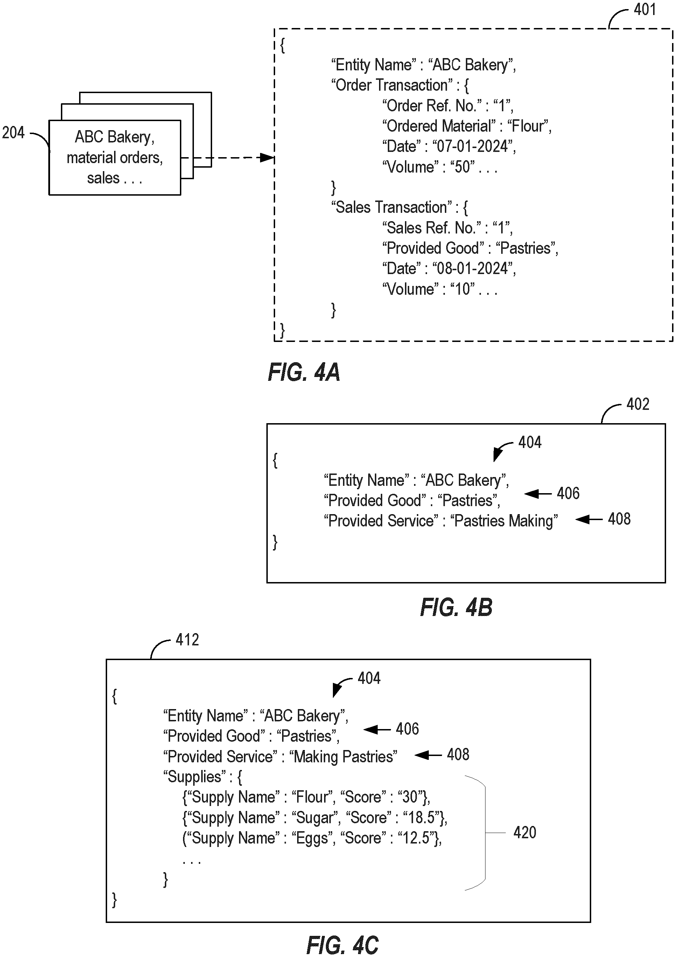

In certain embodiments, these settings and/or preferences may be used as metadata for generating augmented structured entity data (e.g., augmented structured entity data 412 of **FIG. 4C****)** to be used as training data for neural database(s) 114, as described further with respect to **FIG. 3****.**

In some embodiments, these settings and/or preferences enable, for example, recommendation component 118 to determine which one(s) of the results from supplier matching component 116 (e.g., those matching the user settings and/or preferences) may be provided to first user 102 via interface 104 as matched entity(ies).

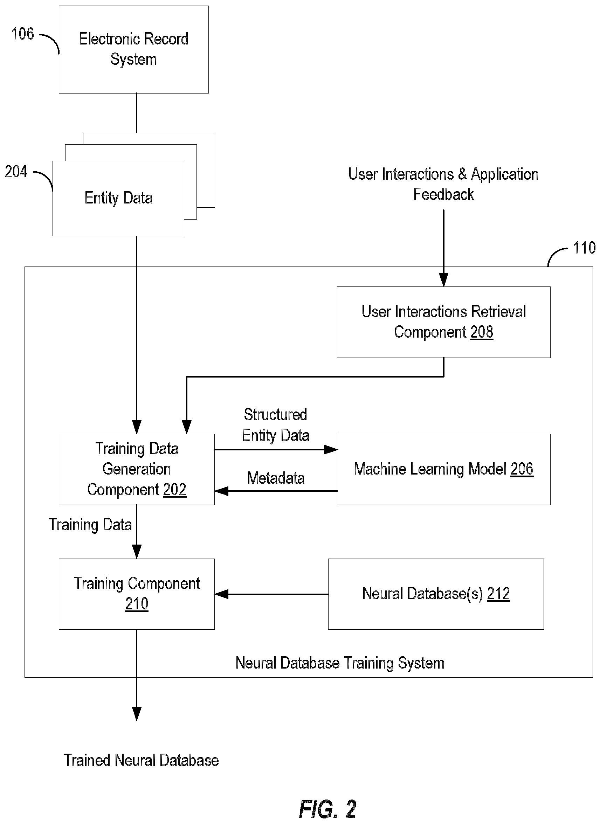

In some embodiments, the additional settings and/or preferences may be determined based on entity data of the entity associated with first user 102 providing goods and/or services (e.g., entity data 204 described with respect to **FIGS. 2-3****).** For example, the entity data of the entity associated with first user 102 may include information related to prior purchases of materials and other related costs and/or expenses, where this information may be indicative of the user preferences based on the supplier entities from whom materials were purchased and what their relevant characteristics are (e.g., their location, owner information, etc.), which may be set as the preferences of first user 102.

In certain embodiments, electronic record application 108, supplier matching component 116, and/or recommendation component 118 may be implemented as part of a single application. In other embodiments, one or more of these components may be implemented as individual services (e.g., microservices) accessed via, for example, APIs.

Neural database(s) 114 may be a neural network (NN)-based system that provides access to data, such as electronic record data (e.g., accounting data) provided via electronic record application 108. Supplier matching component 116 queries neural database(s) 114 for information based on user input received via interface 104. For example, the query may be based on a user input received via interface 104, and may include or be related to a question such as, for example, "who can provide materials that my company needs?" The response from neural database(s) 114 may include information related to one or more supplier entities that supply the materials used by an entity associated with first user 102.

In contrast to any traditional database, which requires significant time and effort to compile an initial full profile of accurate supplier entity information and consistent additional effort (e.g., manual effort) to track changes in supplier entity profile data as well as any user preference for any particular supplier entity(ies), the NN-based system described herein is trained to retrieve a prioritized list of supplier entities that supply materials relevant for the goods and/or services offered by an entity. The retrieved prioritized list of supplier entities is based on entity data (e.g., of the entity offering the goods and/or services, such as the entity associated with first user 102) and may be adapted to settings and/or preferences of any user (e.g., first user 102). The prioritized list of supplier entities based on entity data and adapted to user settings and/or preferences allow the NN-based system described herein to mitigate, for example, the need for consistent manual effort to track changes in supplier entity profile data (which sometimes may be delayed or overlooked with a traditional database). Mitigating the need for consistent manual effort to track changes in supplier entity profile data provides a technical benefit of reducing the delay (e.g., associated with the manual effort described above) in determining a list of target supplier entities. The reduced delay may be achieved by determining a list of target supplier entities based on, for example, entity data including up-to-date information related to supplier entities (e.g., material cost, shipping lead time, etc.). Accordingly, aspects of the present disclosure mitigate the inefficiency in determining a potential supplier entity for a material (e.g., as present when manually compiling and tracking supplier entity information) by utilizing the NN-based system.

Neural database training system 110 trains a neural database to return information related to a user query. For example, neural database training system 110 trains neural database(s) 114 to return information (e.g., one or more supplier entities) related to a user query. Configuration of and additional details related to neural database training system 110 are described further with respect to **FIGS. 2-3****.**

Neural database training system 110 trains neural database(s) 114 based on training data that is prepared based on data extracted from electronic record application 108 (e.g., electronic record data repository of electronic record application 108). By using training data that is prepared based on the actual data (e.g., actual accounting data) associated with an entity (e.g., as available from electronic record application 108), neural database training system 110 trains neural database(s) 114 to return highly accurate results regarding, for example, one or more supplier entities supplying materials used by the entity.

To prepare the training data, neural database training system 110 may prompt a machine learning model to generate materials related to an entity name, or a good or a service provided by an entity (e.g., based on a prompt instructing the machine learning model to predict materials related to an entity name, or a good or a service). Neural database training system 110 may prompt the machine learning model to provide a response regarding the predicted materials in a structured format (e.g., key and value pairs) that associates, for example, an entity name, or a good or a service offered by an entity, to relevant materials. Then, neural database training system 110 may process the extracted data from electronic record application 108 (e.g., actual accounting data related to purchase of a material) to generate metadata to combine with the information regarding the relevant materials, to augment the training data. The extracted data may include not only any data related to the entity (e.g., requesting entity) itself but also data related to other entities. For example, other entities may include entities that have similar entity names and/or offer similar goods and/or services, where data related to these entities includes, for example, accounting data related to purchases of similar materials as those to be predicted by the machine learning model for the requesting entity and/or its offered good and/or service. For example, the extracted data from electronic record application 108 may be used to score or prioritize the key and value pairs related to materials (e.g., associated with an entity name or a good or a service offered by an entity), such that the score or priority data may be used as metadata which may be used to augment the training data.

In certain embodiments, training neural database(s) 114 may include evaluating the similarity of each predicted output related to, for example, a supplier entity to be retrieved (e.g., the supplier entity itself, or a memory location of a data repository associated with the supplier entity), predicted for each entity name or each good or service (e.g., associated with each training data instance), to an expected output (e.g., a label) associated with each training data instance. The evaluation may be performed using a loss function. The loss function is a mathematical function that measures how well a machine learning model (e.g., neural database(s) 114 in this example) is able to predict the desired output (e.g., a label associated with each entity name or each good or service, associated with each training data instance). A loss value determined for each output using the loss function may be minimized (e.g., to equal to zero) when the predicted output for a training data instance matches the label assigned to the training data instance. For example, a standard cross-entropy loss function may be used in this example. Each layer of metadata added to the training data as described above (e.g., score or priority data, as well as other metadata, such as related to any other desired characteristic(s) of a potential supplier entity based on a user setting or preference) may correspond to a parameter for the loss function.

In certain aspects, reinforcement learning component 120 is used to provide additional information, such as information related to user interactions with results provided by neural database(s) 114, to neural database training system 110, where the additional information may be used to further fine-tune neural database(s) 114 (e.g., after the initial deployment of neural database(s) 114). The description related to how reinforcement learning component 120 may be used is described further with respect to **FIGS. 2-3****.**

In some embodiments, the additional information provided by reinforcement learning component 120 may be used to generate further augmented training data (e.g., to further fine-tune neural database(s) 114). The additional information, such as a user interaction with a result regarding a potential supplier entity (e.g., using the result to contact the potential supplier entity or ignoring the result), may provide an additional layer of metadata. In certain embodiments, another neural database instance may be used to track information regarding supplies related to an entity name or a good or a service provided by an entity (e.g., where a supply may be further associated with or dissociated from an entity name or a good or a service provided by an entity, depending on the user interaction). Accordingly, in some embodiments, neural database(s) 114 may be more than one neural database instance, where a first neural database instance may be trained to map an entity name, or a good or a service, to a material, and a second neural database instance may be trained to map an entity name, or a good or a service, to a supplier entity.

### Example Neural Database Training System

**FIG. 2** depicts an example configuration of a neural database training system 110. In this example, neural database training system 110 is configured to generate training data and train a neural database (e.g., neural database 114 of **FIG. 1****)** for matching one entity with one or more supplier entities.

Neural database training system 110 includes training data generation component 202 and training component 210, as well as machine learning model 206, neural database(s) 212, and user interactions retrieval component 208.

Training data generation component 202 receives entity data 204 from electronic record system 106. In some embodiments, electronic record system 106 includes a data storage system (e.g., a remote data storage system), which in some cases may be accessed by one or more APIs. In some embodiments, electronic record system 106 may be a microservice. Entity data 204 may include or relate to data related to an entity stored by electronic record system 106. For example, entity data 204 may include accounting data related to transactions by an entity, such as related to purchase of materials and other costs or expenses related to providing goods and/or services. Additional details regarding entity data 204 are described with respect to **FIG. 4A****.**

Training data generation component 202 utilizes machine learning model 206 to generate metadata based on entity data 204. For example, training data generation component 202 may prompt machine learning model 206, based on an input related to an entity name and/or a good and/or a service provided by the entity, to generate the metadata. As described with respect to neural database training system 110 of **FIG. 1****,** machine learning model 206 may provide a response, including one or more predictions of materials to be used by the requesting entity for providing its goods and/or services. For example, the prompt to machine learning model 206 may include an instruction to predict materials relevant to an entity name or a good or a service provided by an entity (e.g., "*suggest materials to purchase for ABC Bakery*"). In certain embodiments, machine learning model 206 may be an LLM, such as Generative Pre-trained Transformer 4 (GPT-4) model. As described further with respect to **FIG. 3****,** training data generation component 202 provides structured entity data (e.g., entity data 204 stored in structured data format, such as JavaScript Objection Notation (JSON)) to machine learning model 206 to determine metadata related to the information included in the structured entity data. The metadata may be combined with the structured entity data and used as training data for training a neural database. Training data generation component 202 provides the generated training data to training component 210 for training neural database(s) 212, resulting in a trained neural database (e.g., neural database 114 of **FIG. 1****).** In some embodiments, training of neural database(s) 212 may be performed based on a standard cross-entropy loss function as described with respect to neural database training system 110 of **FIG. 1****.**

The trained neural database may be fine-tuned by training component 210 based on the training data generated by training data generation component 202 to return highly accurate results regarding supplier entities. For example, the generated training data, which is generated based at least on entity data 204 described above, can inherently track up-to-date information related to supplier entities (e.g., material cost, shipping lead time, etc.), which may sometimes be overlooked when any traditional database may be used in place of the trained neural database(s) described herein, because the traditional database requires significant time and effort to compile an initial full profile of accurate supplier entity information and consistent additional effort (e.g., manual effort) to track changes in supplier entity profile data. Accordingly, more accurate and up-to-date supplier entity information may be considered in determining potential supplier entities for materials by embodiments of the present disclosure, when compared to any traditional database.

Neural database training system 110 further includes user interactions retrieval component 208 that is used to retrieve information related to user interaction and application feedback from reinforcement learning component 120. User interaction and application feedback can be based on, for example, clickstream data related to a user's use of the application (e.g., related to how frequently the user clicks on the suggested recommendations of supplier entities and which of the suggested recommendations were actually selected by the user). User interaction and application feedback can also include explicit feedback, such as the answer to a question presented to the user, like: "were these results useful?"

As an example, if first user 102 contacts any supplier entity provided by the trained neural database, then a positive training example may be generated indicating the correctness of the neural database response. Similarly, if first user 102 does not contact any supplier entity provided by the trained neural database, then a negative training example may be generated. Thus, user interactions may be used in a reinforcement learning scheme to further fine-tune neural database 114 after its initial deployment.

Accordingly, user interactions may be related to using or not using, by first user 102, the results provided by recommendation component 118 based on data provided by neural database(s) 114 for contacting any supplier entity. Application feedback may be related to, for example, a query result success status as determined by electronic record application 108 regarding whether the results provided by recommendation component 118 based on data provided by neural database(s) 114 correspond to any subsequent procurement transaction. The additional metadata based on the user interactions and/or application feedback may be used, for example, to determine a quantified score between a value such as 1, for a material whose previously suggested supplier entity being used for subsequent procurement transaction, etc., and 0, for a material whose previously suggested supplier entity not being used for subsequent procurement transaction, etc., to be combined with other score(s).

### Example Training Data Generation Component

**FIG. 3** depicts an example configuration of a training data generation component 202 of neural database training system 110.

Training data generation component 202 includes data transformation component 302, metadata generation component 304, and data augmentation component 306.

Data transformation component 302 receives entity data 204 (e.g., from electronic record system 106 of **FIG. 1****).** Data transformation component 302 parses and processes entity data 204 to generate structured entity data in a structured format (e.g., JSON format), including properties having key and value pairs. Additional details regarding structured entity data are described further with respect to **FIG. 4B****.** Data transformation component 302 provides the structured entity data (including, for example, "entity name" property 404, "provided good" property 406, and/or "provided service" property 408 described with respect to **FIG. 4B****)** to metadata generation component 304.

Metadata generation component 304 receives structured entity data from data transformation component 302, and prompts machine learning model 206 based on the structured entity data to receive metadata predicted by machine learning model 206. For example, the metadata output by machine learning model 206 includes one or more materials that can be used by an entity for providing its good(s) and/or service(s).

The prompt to machine learning model 206 may include, for example, an entity name and/or information regarding a good and/or a service provided by the entity. Machine learning model 206 may return data including one or more materials that can be used by the entity. For example, a prompt provided by metadata generation component 304, including an entity name such as "ABC Bakery" and/or information such as "Pastries" and/or "Pastries Making," may be provided to machine learning model 206, which may return, in response, a list of one or more materials related to the information included in the prompt. For example, the returned data may include, but not be limited to, a list of materials, such as flour, sugar, eggs, etc. The returned information may be in any data format that can be processed by, for example, data augmentation component 306 (e.g., JSON). For example, the returned data including the list of materials may be stored as a key and value pair, where the key may be "materials" or "supplies" (or similar), and the value may include "flour, sugar, eggs . . .". In this scenario, an example prompt to machine learning model 206 may be "For {"Provided Good" : "Pastries"}, generate a list of materials for the provided good and provide the list in JSON format, including a property with the key of "Materials" and the value including the list of materials." The output from machine learning model 206 may be {"Materials" : "flour, sugar, eggs"}.

In certain aspects, the generated key and value pairs may include additional information such as related to prioritization of the determined materials. For example, the determined materials may be scored using algorithms that evaluate the frequency and/or "criticality" of the materials. These scores help in prioritizing the materials, with higher scores given to more crucial (higher criticality) and commonly needed (higher frequency) materials.

Criticality can be determined through expert judgment, user-defined settings (e.g., provided as user input via interface 104 of **FIG. 1****),** and/or historical data analysis (e.g., based on entity data 204). Frequency may refer to the number of times a specific material (e.g., a threshold minimum volume of the material) is obtained by an entity within a configured time period (e.g., a week, a month, etc.). This value can be quantified by counting the number of occurrences of procurement transactions for the material in the entity's historical data (e.g., entity data 204). Criticality refers to the importance of a material to an entity for providing its goods or services. This value can be quantified by assigning a weight or a score based on how essential the material is to, for example, the production process for a good or service, as specified by an expert or user input. The criticality score may also be based on the volume of a material ordered or procured in a given period of time, where a higher volume ordered or procured may correspond to a higher criticality score.

For example, if a bakery procures flour 50 times, sugar 30 times, and eggs 20 times over a year, a frequency score for each may be 50 (for flour), 30 (for sugar), and 20 (for eggs), respectively. Additionally, flour, sugar, and eggs may be assigned a criticality score of, respectively, 10, 7, and 5, based on user settings. These values can be used to assign a combined score for each material, for example, by using a formula such as {Combined Score} = {Frequency} * 0.5 + {Criticality} * 0.5. The resulting combined score for each material may then be, respectively, 30 (= 50 * 0.5 + 10 * 0.5), 18.5 (= 30 * 0.5 + 7 * 0.5), and 12.5 (= 20 * 0.5 + 5 * 0.5). This is just one example and other scoring methods may be used.

Other factors may also be used for scoring. For example, personalized preferences, derived from historical data and/or user settings, may be considered. These factors may be given values (e.g., binary values such as 1 if present and 0 if not present) and likewise weighted so as to affect the final score. For example, consider the factor of a women-owned supplier entity, the scoring formula may include {1 if women-owned or 0 if not women-owned} * {factor weighting}. Examples of these other factors include: type of entity, owner status (e.g., veteran-, minority-, or women-owned status), proximity to the requesting entity, shipping lead time, existing promotions, environment friendliness, entity establishment date, employee number, revenue, co-branding availability, etc.

Data augmentation component 306 receives metadata generated by metadata generation component 304 and augments the structured entity data. The augmented structured entity data may be generated by concatenating the structured entity data from data transformation component 302 with the metadata generated by metadata generation component 304. An example of the augmented structured entity data is described with respect to **FIG. 4C****.**

In certain aspects, user interactions and/or application feedback may be used as additional metadata for further augmenting the data to be used as training data for fine-tuning neural database(s) 114 after the initial deployment, as described with respect to user interactions retrieval component 208 of **FIG. 2****.** The user interactions and/or application feedback may be retrieved by user interactions retrieval component 208 of **FIG. 2****,** and provided to data augmentation component 306 to further augment the training data for fine-tuning neural database(s) 114 after the initial deployment.

### Example Structured and Augmented Data Format

**FIGS. 4A-4C** depict illustrations of data generated at various steps of the methods of generating training data to train a neural database for entity matching.

**FIG. 4A** depicts an illustration of entity data 204 described with respect to **FIGS. 2-3****.** Entity data 204 may include data as recorded via electronic record application 108 of **FIG. 1****,** and may include information, such as accounting information, related to potential supplier entities (e.g., as entered by first user 102 and/or second users 112 of **FIG. 1****).** The data recorded via electronic record application 108 of **FIG. 1** may be stored in a structured format, such as JSON. Entity data 204 may be retrieved by a query or an API associated with a data storage system, such as electronic record system 106 of **FIG. 1****.** Entity data 204 (e.g., including a plurality of entity data instances) may be stored as and/or retrieved as one or more JSON objects or other structured data formats. As depicted in **FIG. 4A****,** an example of entity data instance 401 of entity data 204 includes JSON properties for entity name, order transaction, and sales transaction. In some embodiments, entity data 204, such as entity data instance 401, may be retrieved based on one or more parameters (e.g., filtering parameters), such as a user defined time period.

**FIG. 4B** depicts an example of structured entity data 402, as described with respect to **FIGS. 2-3****.** Structured entity data 402 includes "entity name" property 404, "provided good" property 406, and "provided service" property 408. For example, "entity name" property 404 and "provided good" property 406 are based on JSON properties of entity name and sales transaction of entity data instance 401 (of **FIG. 4A****).** Note that in other examples, multiple goods may be included, multiple services may be included. Further, in other examples, one of a good (or goods) or a service (or services) may be included, but not the other.

In this example, structured entity data 402 is in the form of a JSON object, including a plurality of properties having key and value pairs. For example, the "entity name" key is paired with the "ABC Bakery" value, the "provided good" key is paired with the "pastries" value, and so on.

**FIG. 4C** depicts an illustration of augmented structured entity data 412 described with respect to **FIG. 3****.** Augmented structured entity data 412 includes the same properties (key-value pairs) as those in **FIG. 4B** ("entity name" property 404, "provided good" property 406, and "provided service" property 408) and additionally supplies properties 420. Supplies properties 420 is based on metadata generated by metadata generation component 304 described with respect to **FIG. 3****.** The augmentation of supplies properties 420 to the properties in the structure entity data 402 provides additional data for a neural database (e.g., 114 of **FIG. 1****)** to process and thereby improves the accuracy of the results from the neural database.

### Example Output Data Format from Trained Neural Database

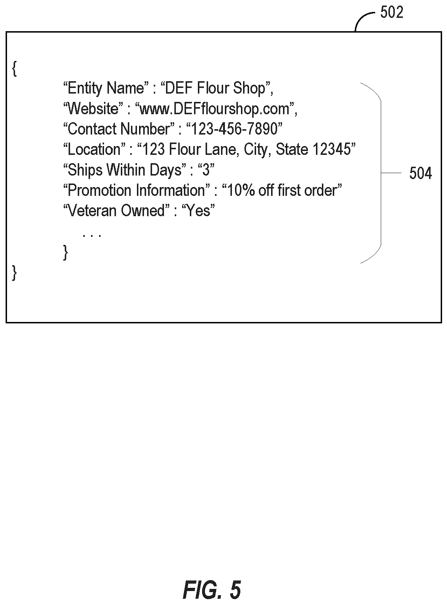

**FIG. 5** depicts output returned by a trained neural database (e.g., neural database 114 of **FIG. 1****).** Specifically in this example, the trained neural database outputs supplier entity data 502 in a JSON format, which includes a plurality of supplier entity properties 504: entity name, website, contact number, location, shipping lead time, promotion, owner status, etc. (e.g., as shown in **FIG. 5****).** Note that supplier entity properties 504 are indicated by way of example, and any number of additional or different properties may be provided as output from the neural database. The structured format of the output makes the output more readily usable by, for example, supplier matching component 116 of **FIG. 1****.**

Supplier entity data 502 may be provided in response to a user query for suppliers related to their goods and services, or alternatively as a proactive suggestion to a user without the need for the user to query the system.

### Example Methods for Training a Neural Database and for Utilizing a Trained Neural Database for Entity Matching

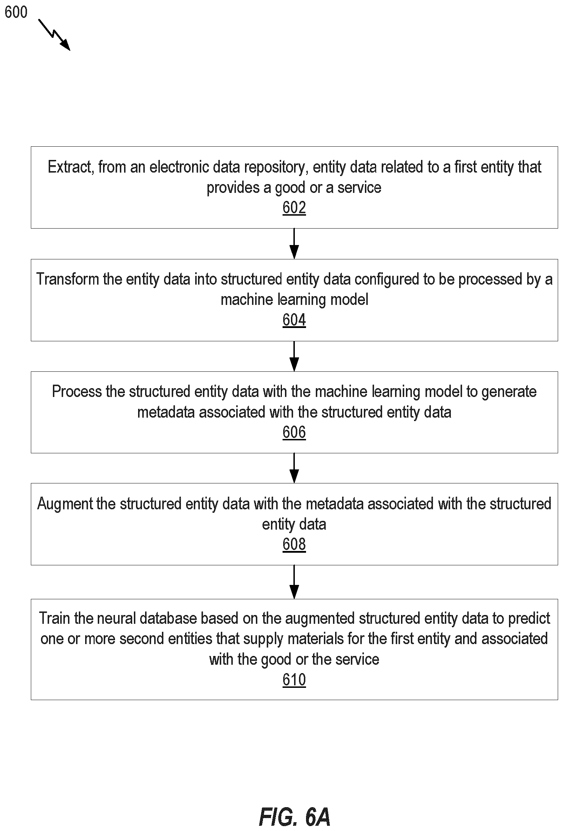

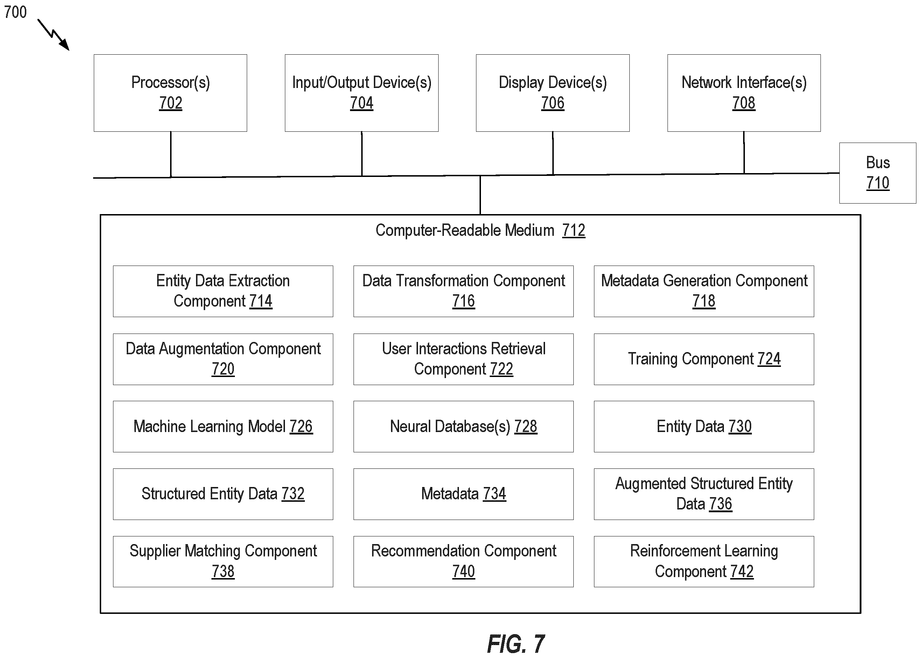

**FIG. 6A** depicts an example method 600 for generating training data to train a neural database for entity matching. In one aspect, method 600 can be implemented by the system 100 of **FIG. 1** (e.g., using at least training data generation component 202 described with respect to **FIGS. 2-3****)** and/or processing system 700 of **FIG. 7****.**

Method 600 starts at block 602 with extracting, from an electronic data repository, entity data related to a first entity that provides a good or a service. The electronic data repository may be a data repository coupled to electronic record application 108 of **FIG. 1****,** and the extracted data may be entity data 204 described with respect to **FIGS. 2-3****.** Extracted data may be received by data transformation component 302 of **FIG. 3****.**

Method 600 continues to block 604 with transforming the entity data into structured entity data configured to be processed by a machine learning model. The structured entity data generated at block 604 may be structured entity data 402 of **FIG. 4B****,** and may be generated by data transformation component 302 of **FIG. 3****.** In some embodiments, the structured entity data may include a plurality of key and value pairs associated with the first entity, at least one of the plurality of key and value pairs may include an entity name, and at least one of the plurality of key and value pairs may include the good or the service provided by the first entity.

Method 600 continues to block 606 with processing the structured entity data with the machine learning model to generate metadata associated with the structured entity data. The metadata may be generated by metadata generation component 304 of +**FIG. 3****.** In some embodiments, the metadata associated with the structured entity data may include a plurality of key and value pairs associated with the materials associated with the good or the service provided by the first entity. In some embodiments, method 600 may also include scoring each respective key and value pair of the plurality of key and value pairs associated with the materials based on one or more of: a frequency with which the first entity obtains each material of the materials, or a criticality of each material of the materials to the first entity for providing the good or the service. For example, scoring each respective key and value pair may be further based on a preference derived from one or more of historical data or user settings. Additionally or alternatively, scoring each respective key and value pair may include determining a weighted sum of a frequency score and a criticality score for each material, where the frequency score is based on a number of procurement transactions for the material within a configured time period, and the criticality score is based on one or more of historical data or user settings. Certain aspects of the scoring are described further with respect to metadata generation component 304 of **FIG. 3****.**

Method 600 continues to block 608 with augmenting the structured entity data with the metadata associated with the structured entity data. The augmenting may be performed by data augmentation component 306 of **FIG. 3****,** to generate augmented structured entity data 412 described with respect to **FIG. 3** and **FIG. 4C****.**

Method 600 continues to block 610 with training the neural database based on the augmented structured entity data to predict one or more second entities that supply materials for the first entity and associated with the good or the service. The training may be performed by training component 210 of **FIG. 2****.**

In some embodiments, method 600 may also include performing reinforcement learning (e.g., via use of user interactions retrieval component 208) to refine the neural database, where the reinforcement learning is based on a user interaction with a query result generated by the neural database.

In some embodiments, method 600 may further include processing a user query with the trained neural database to generate one or more query results, where the one or more query results relate to the one or more second entities that supply the materials associated with the good or the service provided by the first entity. As described with respect to **FIG. 1****,** supplier matching component 116 may generate the one or more query results by querying neural database(s) 114, and send the one or more query results to recommendation component 118 to provide information (e.g., personalized messages for one or more second entities) related to the one or more query results to first user 102 via interface 104.

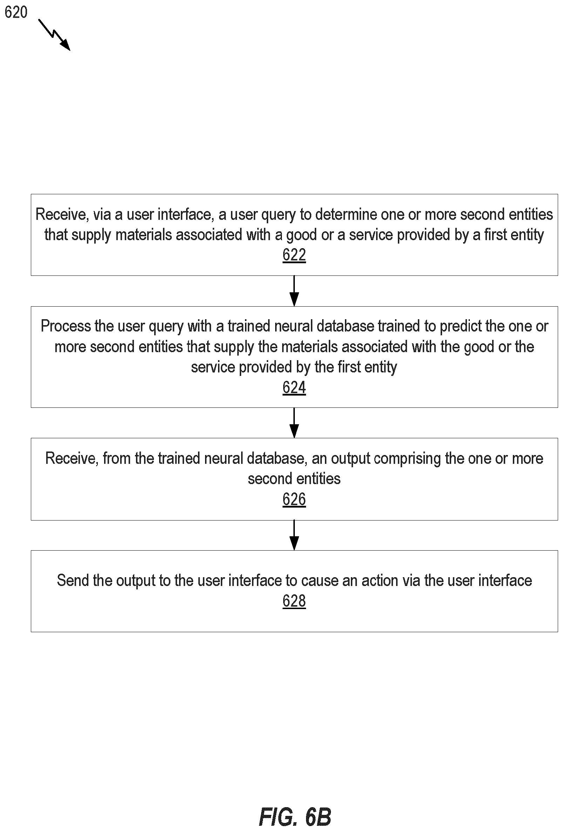

**FIG. 6B** depicts an example method 620 for utilizing a trained neural database for entity matching (e.g., a trained neural database trained based on method 600). In one aspect, method 620 can be implemented by the system 100 of **FIG. 1** (e.g., using at least electronic record application 108 described with respect to **FIG. 1****)** and/or processing system 700 of **FIG. 7****.**

Method 620 starts at block 622 with receiving, via a user interface, a user query to determine one or more second entities that supply materials associated with a good or a service provided by a first entity. The user interface may correspond to interface 104 of **FIG. 1****,** providing access to, for example, supplier matching component 116 of **FIG. 1** for matching the one or more second entities to the product or the service provided by the first entity.

Method 620 continues to block 624 with processing the user query with a trained neural database trained to predict the one or more second entities that supply the materials associated with the good or the service provided by the first entity. In some embodiments, the trained neural database (e.g., neural database 114 of **FIG. 1****)** is trained based on augmented structured entity data. The augmented structured entity data, such as augmented structured entity data 412 described with respect to **FIG. 3** and **FIG. 4C****,** may include structured entity data including a plurality of key and value pairs associated with the first entity, wherein at least one of the plurality of key and value pairs includes an entity name, and at least one of the plurality of key and value pairs includes the good or the service provided by the first entity. Further, the augmented structured entity data may also include metadata associated with the structured entity data.

Method 620 continues to block 626 with receiving, from the trained neural database, an output including the one or more second entities. In some embodiments, the received output also includes priority data associated with the one or more second entities. For example, the priority data may be based on the scoring mechanism described with respect to **FIG. 3****.**

Method 620 continues to block 628 with sending the output to the user interface to cause an action via the user interface. In some embodiments, causing the action via the user interface may include: determining a subset of the one or more second entities based on the priority data, and generating one or more personalized messages to contact the subset of the one or more second entities. In certain embodiments, generating the one or more personalized messages may include generating the one or more personalized messages by prompting a machine learning model to generate the one or more personalized messages.

Method 600 provides a method of generating training data for providing a trained neural database (e.g., neural database 114 of **FIG. 1****),** which may be utilized for matching a good or a service offered by an entity to a supplier entity (e.g., based on method 620). The generated training data is based on, for example, a variety of metadata generated by metadata generation component 304 of **FIG. 3** based on actual data (e.g., entity data 204), such as actual accounting data, associated with an entity. Accordingly, method 600 enables neural database 114 to predict results regarding one or more supplier entities matched to the requesting entity and its offered good or service with high accuracy and relevance. For example, the metadata generated based on the actual accounting data and the reinforcement learning based on a user interaction with a query result from the trained neural database mitigate the technical problem related to potential misinformation, which may result from, for example, overlooked changes in supplier entity information. For example, tedious and time-consuming management (e.g., manual management) of supplier entity information stored by a traditional database may result in the stored information going out of date and becoming a source of misinformation, which may result in reduced accuracy or relevance in any supplier entity information retrieved based on a user query (e.g., matched to a good or a service). The methods described herein provide a solution to this technical problem by training a neural database based on augmented training data. The augmented training data is based on entity data and metadata generated based on the entity data. The entity data includes actual and up-to-date information regarding any potential supplier entity. The entity data, including the actual and up-to-date information regarding any potential supplier entity, alleviates the need for the tedious and time-consuming management of supplier entity information and enables up-to-date supplier entity information to be tracked.

Note that **FIGS. 6A** and **6B** depict example methods, and other methods including fewer, additional, or alternative operations are possible consistent with this disclosure.

### Example Processing System for Preparing Training Data

**FIG. 7** depicts an example processing system 700 configured to perform various aspects described herein, including, for example, methods 600 and 620 as described above with respect to **FIG. 6A** and **FIG. 6B****.**

Processing system 700 is generally an example of an electronic device configured to execute computer-executable instructions, such as those derived from compiled computer code, including without limitation personal computers, tablet computers, servers, smart phones, smart devices, wearable devices, augmented and/or virtual reality devices, and others.

In the depicted example, processing system 700 includes one or more processors 702, one or more input/output devices 704, one or more display devices 706, one or more network interfaces 708 through which processing system 700 is connected to one or more networks (e.g., a local network, an intranet, the Internet, or any other group of processing systems communicatively connected to each other), and computer-readable medium 712. In the depicted example, the aforementioned components are coupled by a bus 710, which may generally be configured for data exchange amongst the components. Bus 710 may be representative of multiple buses, while only one is depicted for simplicity.

Processor(s) 702 are generally configured to retrieve and execute instructions provided from one or more computer-readable mediums. A computer readable medium may be provided by way of a computer readable storage medium, such as one or more memories that are configured to store such instruction, including local memories like computer-readable medium 712, as well as remote memories and data stores. A computer-readable storage medium may be identified as a non-transitory computer readable medium. A computer readable medium may also or alternatively be provided by way of a transmission medium, such as carries waves or transmission signals that are configures to convey such instructions. A computer readable transmission medium may convey instructions between computer-readable storage mediums, and/or between computer readable storage mediums and processors, and/or between processors. A computer-readable transmission medium may convey instructions between components of a single computer system and/or between plural separate computer systems. A computer-readable transmission medium may convey instructions between components of a single computer system and/or between plural separate computer systems.

Similarly, processor(s) 702 are configured to store application data residing in local memories like the computer-readable medium 712, as well as remote memories and data stores. More generally, bus 710 is configured to transmit programming instructions and application data among the processor(s) 702, display device(s) 706, network interface(s) 708, and/or computer-readable medium 712. In certain embodiments, processor(s) 702 are representative of one or more central processing units (CPUs), graphics processing unit (GPUs), tensor processing unit (TPUs), accelerators, and other processing devices.

Input/output device(s) 704 may include any device, mechanism, system, interactive display, and/or various other hardware and software components for communicating information between processing system 700 and a user of processing system 700. For example, input/output device(s) 704 may include input hardware, such as a keyboard, touch screen, button, microphone, speaker, and/or other device for receiving inputs from the user and sending outputs to the user. In some embodiments, input/output device(s) 704 may include interface 104 of **FIG. 1****.** Input/output device(s) 704 may be configured to receive a user input (e.g., a user query), as performed at block 622 of method 620.

Display device(s) 706 may generally include any sort of device configured to display data, information, graphics, user interface elements, and the like to a user. For example, display device(s) 706 may include internal and external displays such as an internal display of a tablet computer or an external display for a server computer or a projector. Display device(s) 706 may further include displays for devices, such as augmented, virtual, and/or extended reality devices. In various embodiments, display device(s) 706 may be configured to display a graphical user interface.

Network interface(s) 708 provide processing system 700 with access to external networks and thereby to external processing systems. Network interface(s) 708 can generally be any hardware and/or software capable of transmitting and/or receiving data via a wired or wireless network connection. Accordingly, network interface(s) 708 can include a communication transceiver for sending and/or receiving any wired and/or wireless communication.

Computer-readable medium 712 may be a volatile memory, such as a random access memory (RAM), or a nonvolatile memory, such as nonvolatile random access memory (NVRAM), or the like. In this example, computer-readable medium 712 includes entity data extraction component 714, data transformation component 716, metadata generation component 718, data augmentation component 720, and training component 724. Additionally, computer-readable medium 712 includes user interactions retrieval component 722, machine learning model 726, and neural database(s) 728. Furthermore, computer-readable medium 712 stores entity data 730, structured entity data 732, metadata 734, augmented structured entity data 736, supplier matching component 738, recommendation component 740, and reinforcement learning component 742.

In certain embodiments, entity data extraction component 714 is configured to extract, from an electronic data repository, entity data related to a first entity that provides a good or a service, as performed at block 602 of method 600. The extracted entity data (e.g., entity data 204) may be stored as entity data 730 on computer-readable medium 712.

In some embodiments, data transformation component 716 is configured to transform the entity data (e.g., entity data 730) into structured entity data configured to be processed by a machine learning model, as performed at block 604 of method 600. The structured entity data (e.g., structured entity data 402 of **FIG. 4B****)** may be stored as structured entity data 732 on computer-readable medium 712. The machine learning model may be at least one of machine learning model 726, and correspond to machine learning model 206 of **FIG. 2****.** In some embodiments, machine learning model 726 may also include a machine learning model used to generate personalized messages for recommendation component 118 of **FIG. 1****.**

In certain embodiments, metadata generation component 718 is configured to process the structured entity data (e.g., structured entity data 732) with the machine learning model to generate metadata associated with the structured entity data, as performed at block 606 of method 600. The generated metadata may be stored as metadata 734 on computer-readable medium 712.

In some embodiments, data augmentation component 720 is configured to augment the structured entity data (e.g., structured entity data 732) with the metadata (e.g., metadata 734) associated with the structured entity data, as performed at block 608 of method 600. The augmented structured entity data may be stored as augmented structured entity data 736 (e.g., corresponding to augmented structured entity data 412 of **FIG. 4C****)** on computer-readable medium 712.

In certain embodiments, training component 724 is configured to train a neural database based on the augmented structured entity data (e.g., augmented structured entity data 736) to predict one or more second entities that supply materials for the first entity and associated with the good or the service, as performed at block 610 of method 600. Training component 724 corresponds to training component 210 of **FIG. 2****,** and the training provides a trained neural database (e.g., neural database 114 of **FIG. 1****)** corresponding to neural database(s) 728.

In some embodiments, user interactions retrieval component 722 (corresponding to user interactions retrieval component 208 of **FIG. 2****)** is configured to retrieve user interactions for RLHF, as described with respect to, for example, **FIG. 1****.**

In certain embodiments, supplier matching component 738 corresponds to supplier matching component 116 of **FIG. 1****.** Supplier matching component 738 is configured to process a user query (e.g., as received via input/output device(s) 704) with a trained neural database trained to predict one or more second entities (e.g., supplier entities) that supply materials associated with a good or a service provided by a first entity, as performed at block 624 of method 620. Further, supplier matching component 738 is configured to receive, from the trained neural database, an output including the one or more second entities, as performed at block 626 of method 620.

In some embodiments, recommendation component 740 corresponds to recommendation component 118 of **FIG. 1****.** Recommendation component 740 is configured to send an output (e.g., including or related to one or more supplier entities) to a user interface (e.g., provided via input/output device(s) 704) to cause an action via the user interface, as performed at block 628 of method 620. For example, recommendation component 740 may send an output including a list of supplier entities that offer relevant materials to goods and services offered by an entity, such that a user may take an action via the user interface to, for example, contact one or more of the supplier entities by sending personalized message(s), as described with respect to recommendation component 118 of **FIG. 1****.**

In certain embodiments, reinforcement learning component 742 corresponds to reinforcement learning component 120 of **FIG. 1****.** Reinforcement learning component 742 is configured to implement RLHF-related functionalities, as described with respect to reinforcement learning component 120 of **FIG. 1****.**

Note that **FIG. 7** is just one example of a processing system consistent with aspects described herein, and other processing systems having additional, alternative, or fewer components are possible consistent with this disclosure.

Therefore, from one perspective, there have been described approached for training a neural database for entity matching. In examples, a method may include: extracting, from an electronic data repository, entity data related to a first entity that provides a good or a service; transforming the entity data into structured entity data configured to be processed by a machine learning model; processing the structured entity data with the machine learning model to generate metadata associated with the structured entity data; augmenting the structured entity data with the metadata associated with the structured entity data; and training the neural database based on the augmented structured entity data to predict one or more second entities that supply materials for the first entity and associated with the good or the service.

### Example Clauses

Implementation examples are described in the following numbered clauses:
Clause 1: A method of training a neural database for entity matching, comprising: extracting, from an electronic data repository, entity data related to a first entity that provides a good or a service; transforming the entity data into structured entity data configured to be processed by a machine learning model; processing the structured entity data with the machine learning model to generate metadata associated with the structured entity data; augmenting the structured entity data with the metadata associated with the structured entity data; and training the neural database based on the augmented structured entity data to predict one or more second entities that supply materials for the first entity and associated with the good or the service.
Clause 2: The method in accordance with Clause 1, wherein: the structured entity data comprises a plurality of key and value pairs associated with the first entity, at least one of the plurality of key and value pairs comprises an entity name, and at least one of the plurality of key and value pairs comprises the good or the service provided by the first entity.
Clause 3: The method in accordance with Clause 2, wherein the metadata associated with the structured entity data comprises a plurality of key and value pairs associated with the materials associated with the good or the service provided by the first entity.
Clause 4: The method in accordance with Clause 3, further comprising scoring each respective key and value pair of the plurality of key and value pairs associated with the materials based on one or more of: a frequency with which the first entity obtains each material of the materials; or a criticality of each material of the materials to the first entity for providing the good or the service.
Clause 5: The method in accordance with Clause 4, wherein scoring each respective key and value pair is further based on a preference derived from one or more of historical data or user settings.
Clause 6: The method in accordance with any one of Clauses 4-5, wherein scoring each respective key and value pair comprises determining a weighted sum of a frequency score and a criticality score for each material, wherein: the frequency score is based on a number of procurement transactions for the material within a configured time period, and the criticality score is based on one or more of historical data or user settings.
Clause 7: The method in accordance with any one of Clauses 1-6, further comprising: performing reinforcement learning to refine the neural database, wherein the reinforcement learning is based on a user interaction with a query result generated by the neural database.
Clause 8: The method in accordance with any one of Clauses 1-7, further comprising: processing a user query with the trained neural database to generate one or more query results, wherein the one or more query results relate to the one or more second entities that supply the materials associated with the good or the service provided by the first entity.
Clause 9: A method, comprising: receiving, via a user interface, a user query to determine one or more second entities that supply materials associated with a good or a service provided by a first entity; processing the user query with a trained neural database trained to predict the one or more second entities that supply the materials associated with the good or the service provided by the first entity; receiving, from the trained neural database, an output comprising the one or more second entities; and sending the output to the user interface to cause an action via the user interface.
Clause 10: The method in accordance with Clause 9, wherein the trained neural database is trained based on augmented structured entity data comprising: structured entity data comprising a plurality of key and value pairs associated with the first entity, wherein: at least one of the plurality of key and value pairs comprises an entity name, and at least one of the plurality of key and value pairs comprises the good or the service provided by the first entity; and metadata associated with the structured entity data.
Clause 11: The method in accordance with Clause 9, wherein: the received output further comprises priority data associated with the one or more second entities, and causing the action via the user interface comprises: determining a subset of the one or more second entities based on the priority data; and generating one or more personalized messages to contact the subset of the one or more second entities.
Clause 12: The in accordance with Clause 11, wherein generating the one or more personalized messages comprises generating the one or more personalized messages by prompting a machine learning model to generate the one or more personalized messages.
Clause 13: A processing system, comprising: a memory comprising computer-executable instructions; and a processor configured to execute the computer-executable instructions and cause the processing system to perform a method in accordance with any one of Clauses 1-12.
Clause 14: A processing system, comprising means for performing a method in accordance with any one of Clauses 1-12.
Clause 15: A computer-readable medium comprising program code for causing a processing system to perform the steps of any one of Clauses 1-12.
Clause 16: A computer program product embodied on a computer-readable storage medium comprising code for performing a method in accordance with any one of Clauses 1-12.
Clause 17. A method of training a neural database for entity matching, comprising: extracting, from an electronic data repository, entity data related to a first entity that provides a good or a service; transforming the entity data into structured entity data configured to be processed by a machine learning model; processing the structured entity data with the machine learning model to generate metadata associated with the structured entity data; augmenting the structured entity data with the metadata associated with the structured entity data; and training the neural database based on the augmented structured entity data to predict one or more second entities that supply materials for the first entity and associated with the good or the service.
Clause 18. The method of Clause 17, wherein: the structured entity data comprises a plurality of key and value pairs associated with the first entity, at least one of the plurality of key and value pairs comprises an entity name, and at least one of the plurality of key and value pairs comprises the good or the service provided by the first entity.
Clause 19. The method of Clause 18, wherein the metadata associated with the structured entity data comprises a plurality of key and value pairs associated with the materials associated with the good or the service provided by the first entity.
Clause 20. The method of Clause 19 further comprising scoring each respective key and value pair of the plurality of key and value pairs associated with the materials based on one or more of: a frequency with which the first entity obtains each material of the materials; or a criticality of each material of the materials to the first entity for providing the good or the service.
Clause 21. The method of Clause 20, wherein scoring each respective key and value pair is further based on a preference derived from one or more of historical data or user settings.
Clause 22. The method of Clause 20 or 21, wherein scoring each respective key and value pair comprises determining a weighted sum of a frequency score and a criticality score for each material, wherein: the frequency score is based on a number of procurement transactions for the material within a configured time period, and the criticality score is based on one or more of historical data or user settings.
Clause 23. The method of any of Clauses 17 to 22, further comprising: performing reinforcement learning to refine the neural database, wherein the reinforcement learning is based on a user interaction with a query result generated by the neural database.
Clause 24. The method of any of Clauses 17 to 23, further comprising: processing a user query with the trained neural database to generate one or more query results, wherein the one or more query results relate to the one or more second entities that supply the materials associated with the good or the service provided by the first entity.
Clause 25. A processing system, comprising: a memory comprising computer-executable instructions; and a processor configured to execute the computer-executable instructions and cause the processing system to: extract, from an electronic data repository, entity data related to a first entity that provides a good or a service; transform the entity data into structured entity data configured to be processed by a machine learning model; process the structured entity data with the machine learning model to generate metadata associated with the structured entity data; augment the structured entity data with the metadata associated with the structured entity data; and train a neural database based on the augmented structured entity data to predict one or more second entities that supply materials for the first entity and associated with the good or the service.
Clause 26. The processing system of Clause 25 wherein: the structured entity data comprises a plurality of key and value pairs associated with the first entity, at least one of the plurality of key and value pairs comprises an entity name, and at least one of the plurality of key and value pairs comprises the good or the service provided by the first entity.
Clause 27. The processing system of Clause 26, wherein the metadata associated with the structured entity data comprises a plurality of key and value pairs associated with the materials associated with the good or the service provided by the first entity.
Clause 28. The processing system of Clause 27, wherein the processor is further configured to cause the processing system to score each respective key and value pair of the plurality of key and value pairs associated with the materials based on one or more of: a frequency with which the first entity obtains each material of the materials, or a criticality of each material of the materials to the first entity for providing the good or the service.
Clause 29. The processing system of Clause 28, wherein to score each respective key and value pair is further based on a preference derived from one or more of historical data or user settings.
Clause 30. The processing system of Clause 28 or 29, wherein to score each respective key and value pair comprises to determine a weighted sum of a frequency score and a criticality score for each material, wherein: the frequency score is based on a number of procurement transactions for the material within a configured time period, and the criticality score is based on one or more of historical data or user settings.
Clause 31. The processing system of any of Clauses 25 to 30, wherein the processor is further configured to cause the processing system to: perform reinforcement learning to refine the neural database, wherein the reinforcement learning is based on a user interaction with a query result generated by the neural database.
Clause 32. The processing system of any of Clauses 25 to 31, wherein the processor is further configured to cause the processing system to: process a user query with the trained neural database to generate one or more query results, wherein the one or more query results relate to the one or more second entities that supply the materials associated with the good or the service provided by the first entity.
Clause 33. A method, comprising: receiving, via a user interface, a user query to determine one or more second entities that supply materials associated with a good or a service provided by a first entity; processing the user query with a trained neural database trained to predict the one or more second entities that supply the materials associated with the good or the service provided by the first entity; receiving, from the trained neural database, an output comprising the one or more second entities; and sending the output to the user interface to cause an action via the user interface.
Clause 34. The method of Clause 33, wherein the trained neural database is trained based on augmented structured entity data comprising: structured entity data comprising a plurality of key and value pairs associated with the first entity, wherein: at least one of the plurality of key and value pairs comprises an entity name, and at least one of the plurality of key and value pairs comprises the good or the service provided by the first entity; and metadata associated with the structured entity data.
Clause 35. The method of Clause 33 or 34, wherein: the received output further comprises priority data associated with the one or more second entities, and causing the action via the user interface comprises: determining a subset of the one or more second entities based on the priority data; and generating one or more personalized messages to contact the subset of the one or more second entities.
Clause 36. The method of Clause 35, wherein generating the one or more personalized messages comprises generating the one or more personalized messages by prompting a machine learning model to generate the one or more personalized messages.

### Additional Considerations

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A method of training a neural database for entity matching, comprising:
extracting, from an electronic data repository, entity data related to a first entity that provides a good or a service;
transforming the entity data into structured entity data configured to be processed by a machine learning model;
processing the structured entity data with the machine learning model to generate metadata associated with the structured entity data;
augmenting the structured entity data with the metadata associated with the structured entity data; and
training the neural database based on the augmented structured entity data to predict one or more second entities that supply materials for the first entity and associated with the good or the service.

2. The method of Claim 1, wherein:
the structured entity data comprises a plurality of key and value pairs associated with the first entity,
at least one of the plurality of key and value pairs comprises an entity name, and
at least one of the plurality of key and value pairs comprises the good or the service provided by the first entity.

3. The method of Claim 2, wherein the metadata associated with the structured entity data comprises a plurality of key and value pairs associated with the materials associated with the good or the service provided by the first entity.

4. The method of Claim 3, further comprising scoring each respective key and value pair of the plurality of key and value pairs associated with the materials based on one or more of:
a frequency with which the first entity obtains each material of the materials; or
a criticality of each material of the materials to the first entity for providing the good or the service.

5. The method of Claim 4, wherein scoring each respective key and value pair is further based on a preference derived from one or more of historical data or user settings.

6. The method of Claim 4 or 5, wherein scoring each respective key and value pair comprises determining a weighted sum of a frequency score and a criticality score for each material, wherein:
the frequency score is based on a number of procurement transactions for the material within a configured time period, and
the criticality score is based on one or more of historical data or user settings.

7. The method of any of Claims 1 to 6, further comprising:
performing reinforcement learning to refine the neural database,
wherein the reinforcement learning is based on a user interaction with a query result generated by the neural database.

8. The method of any of Claims 1 to 6, further comprising:
processing a user query with the trained neural database to generate one or more query results,
wherein the one or more query results relate to the one or more second entities that supply the materials associated with the good or the service provided by the first entity.

9. A processing system, configured to:
extract, from an electronic data repository, entity data related to a first entity that provides a good or a service;
transform the entity data into structured entity data configured to be processed by a machine learning model;
process the structured entity data with the machine learning model to generate metadata associated with the structured entity data;
augment the structured entity data with the metadata associated with the structured entity data; and
train a neural database based on the augmented structured entity data to predict one or more second entities that supply materials for the first entity and associated with the good or the service.

10. The processing system of Claim 9, further configured to provide functionality corresponding to the steps of any of claims 2 to 8.

11. A method, comprising:
receiving, via a user interface, a user query to determine one or more second entities that supply materials associated with a good or a service provided by a first entity;
processing the user query with a trained neural database trained to predict the one or more second entities that supply the materials associated with the good or the service provided by the first entity;
receiving, from the trained neural database, an output comprising the one or more second entities; and
sending the output to the user interface to cause an action via the user interface.

12. The method of Claim 11, wherein the trained neural database is trained based on augmented structured entity data comprising:
structured entity data comprising a plurality of key and value pairs associated with the first entity, wherein:
at least one of the plurality of key and value pairs comprises an entity name, and
at least one of the plurality of key and value pairs comprises the good or the service provided by the first entity; and
metadata associated with the structured entity data.

13. The method of Claim 11 or 12, wherein:
the received output further comprises priority data associated with the one or more second entities, and
causing the action via the user interface comprises:
determining a subset of the one or more second entities based on the priority data; and
generating one or more personalized messages to contact the subset of the one or more second entities.

14. The method of Claim 13, wherein generating the one or more personalized messages comprises generating the one or more personalized messages by prompting a machine learning model to generate the one or more personalized messages.
